# EUROPÄISCHE PATENTSCHRIFT

(11) **EP 2 480 613 B1**
(45) Veröffentlichungstag und Bekanntmachung des Hinweises auf die Patenterteilung: **31.10.2018**
(21) Anmeldenummer: 10773232.3
(22) Anmeldetag: 22.09.2010
(51) Int. Cl.: C09D 201/00, C09D 5/03, C08K 5/06, C08K 9/12, C09D 7/63

(54) **ZUSAMMENSETZUNGEN ENTHALTEND DIALKYLETHER, DARAUS HERGESTELLTE BESCHICHTUNGEN UND VERWENDUNG VON DIALKYLETHERN**
COMPOSITIONS CONTAINING DIALKYLETHERS, THUS PRODUCED COATINGS AND USE OF DIALKYLETHERS
COMPOSITIONS CONTENANT DES DIALKYLÉTHERS, REVÊTEMENTS PRODUITS À PARTIR DE CES COMPOSITIONS ET UTILISATION DE DIALKYLÉTHERS

(30) Priorität: 23.09.2009 DE 102009042447
(43) Veröffentlichungstag der Anmeldung: 01.08.2012
(73) Patentinhaber: SASOL Germany GmbH, 20537 Hamburg (DE)
(72) Erfinder: HERZOG, Oliver, 21502 Geesthacht (DE); SCHONS-LÜDER, Karin, 25541 Brunsbüttel (DE)
(74) Vertreter: Müller Schupfner & Partner Patent- und Rechtsanwaltspartnerschaft mbB
(86) Internationale Anmeldenummer: PCT/DE2010/001107
(87) Internationale Veröffentlichungsnummer: WO 2011/035766

(56) Entgegenhaltungen:
- EP-A1- 2 408 866
- EP-B1- 1 095 111
- GB-A- 913 044
- US-A- 2 873 202

## Beschreibung

Die Erfindung betrifft eine Zusammensetzung zur Herstellung von Beschichtungen enthaltend Dialkylether als Additiv und die Verwendung derartiger Zusammensetzungen in Beschichtungen.

Es ist bekannt, zur Verbesserung von Farb- und Lackeigenschaften Additive einzusetzen. Als Additive sind sehr unterschiedliche Substanzen bekannt und im Einsatz, u. a. Wachse. Wachsartige Lackadditive können in Form von wachsbeschichteten Festkörper-Partikeln eingebracht werden und wirken häufig als Mattierungsmittel.

Die DE 1006100 B (entspricht der US 2,838,413) offenbart die Herstellung eines Mattierungsmittels aus Kieselsäurehydrogelen, die getrocknet, bei erhöhten Temperaturen aktiviert und mit einem Petroleumwachs der Kettenlänge C50 bis C60 mit niedriger Säure-, Iod- und Verseifungszahl sowie einem Schmelzpunkt größer 80°C imprägniert sind.

Die US 3,816,154 beschreibt die Verwendung von wachsbeschichteten Silicagelen als Mattierungsmittel in Lacken. Das Wachs ist entweder als Schmelzcoating oder Emulsionscoating auf die Silicagelpartikel aufgezogen. Wird das Silicagel gleichzeitig mit Wachsen und Fettsäuren beschichtet, wird eine bessere Dispergierbarkeit und bessere Lichtstreueigenschaften gefunden. Die Additivzusammensetzung wird in einer Strahlmühle zu einer Partikelgröße von 2 bis 10 µm vermahlen, wobei das Wachs ein Petroleum- oder Polyolefinwachs ist und die eingesetzte Fettsäure eine Kettlänge von C12 bis C18 aufweist.

Die US 2001/0006993 offenbart ein trocken gemischtes Additiv, bestehend aus einer oder mehreren filmbildenden polymeren Komponenten und einem oder mehreren Trägerkomponenten, basierend auf Tonerde, Aluminiumhydroxid, wachsbeschichtetem Kieselgel oder einer Kombination. Das Additiv wird als Glanzreduktionsmittel ausgelobt.

Das EP 1095111 beschreibt eine Pulverlackzusammensetzung, bei der ein wachsbeschichtetes Siliziumdioxid in fein verteilter Form als Additiv durch Trockenvermischen zugesetzt wird, wobei dieses auch Aluminiumoxid und Aluminiumhydroxid enthalten kann. Als Wachse werden natürliches Tierwachs (z.B. Bienenwachs und Lanolin) oder natürliche Pflanzenwachse (z.B. Carnaubawachs), Petroleumwachse (z.B. Paraffinwachs, Mikrokristallines Wachs) oder synthetische Wachse (z.B. Polyethylen, Polyoletherester) angegeben. Weiterhin können langkettige Ester und Kohlenwasserstoffe zum Einsatz kommen.

In der US 5,356,971 wird offenbart, dass synthetisches oder natürliches Wachs zu Pulverlacken zugemischt bessere Gleiteigenschaften und Wasserabweisung schafft. Es wird kein negativer Einfluss auf Witterungs- und Säurebeständigkeit beobachtet. Der Schmelzpunkt des Wachses sollte im Bereich von 50 bis 280°C liegen und idealerweise 10 bis 20°C unter der Verarbeitungstemperatur. Die Gruppe der Wachse umfasst dabei natürliche Tier-, Pflanzen- und Petroleumwachse oder Mineralwachse sowie langkettige Ester. Wird reines Wachs eingesetzt, wird bei höheren Wachsanteilen (z.B. > 10 Gew. %) die Metalladhäsion des Pulverlackes negativ beeinflusst. Wird geträgertes Wachs verwendet, wird die Kratzfestigkeit schon ab Beladungen mit mehr als 15% negativ beeinflusst.

Es wurde überraschend gefunden, dass die Additivierung von Lacken mit geträgerten langkettigen Dialkylethern zu einer höheren Flexibilität, Chemikalienresistenz und Kratzfestigkeit der ausgehärteten Beschichtungsmassen führt.

Aufgabe der vorliegenden Erfindung ist es, ein Additiv bereitzustellen, das in verschiedenen Farb- und Lacksystemen zu verbesserten Eigenschaften des Lackes bzw. der Farbe führt. Obige Aufgabe ist erfindungsgemäß durch den Gegenstand der unabhängigen Ansprüche gelöst. Vorteilhafte Ausgestaltungen sind Gegenstand der Unteransprüche oder nachfolgend beschrieben.

Die Dialkylether bzw. Dialkylether - Mischungen, weisen 24 und mehr Kohlenstoffatome auf, insbesondere 32 bis 44 Kohlenstoffatome. Die Dialkylether bzw. Dialkylether-Mischungen sind bei Raumtemperatur (25°C) fest. Vorzugsweise handelt es sich um symmetrische Dialkylether. Als Dialkylether eignen sich langkettige gesättigte und ungesättigte Dialkylether, beispielsweise, aber nicht hierauf beschränkt: Didodecylether, Ditetradecylether, Dihexadecylether, Dioctadecylether, Dieicosylether, Didocosylether, Ditetracosylether,

Dihexacosylether, Dioctacosylether, Ditriacontylether, Didotriacontylether sowie Mischungen daraus.

Durch Zugabe des erfindungsgemäßen Additivs bestehend aus langkettigen Dialkylethern zu Farben und Lacken, im Besonderen Pulverlacken, kann sowohl die Flexibilität, die Chemikalienresistenz als auch die Kratzfestigkeit erhöht werden.

Die Dialkylether werden als Feststoffpartikel mit mittleren Teilchengrößen (D₅₀) von kleiner 150 µm, insbesondere kleiner 60 µm, eingesetzt. Der Dialkylether wird er auf ein anorganisches Trägermaterial aufgezogen (z.B. D₅₀ < 150 µm, bevorzugt D₅₀ < 30 µm). Die Partikelgröße bzw. der mittlere Teilchendurchmesser D₅₀ wird mit dem Malvern Mastersizer 2000 nach ISO 13320-1 bestimmt und nach der Fraunhofer-Theorie ausgewertet.

Als Trägermaterialien finden anorganische Komponenten Verwendung. Je nach Material und Oberflächenbeschaffenheit werden dabei besondere Effekte erzielt. Als anorganische Komponenten werden eingesetzt Kieselsäure, Kieselgele, Tonerden und Tonerdehydrate. Als besonders gut geeignet haben sich in diesem Zusammenhang Produkte hoher spezifischer Oberfläche (z.B. > 140 m²/g gemessen mittels BET N₂ nach DIN ISO 9277) erwiesen. Diese lassen sich mit den Dialkylethern problemlos Beladungen von bis zu 70 Gew.% bezogen auf die Summe an Träger und Dialkylether beschichten, ohne die Rieselfähigkeit zu verlieren. Werden Produkte niedrigerer spezifischer Oberfläche verwendet, so muss eine geringere Dialkylether - Beladung verwendet werden. Als praktikabel haben sich bei Oberflächen von <50 m²/g maximale Beladungen von 35 Gew.%, bei 50-140 m²/g maximale Beladungen von 50 Gew.% und bei >140 m²/g von bis zu 70 Gew.% erwiesen.

Lacke im Sinne der vorliegenden Erfindung können in lösemittelhaltige, wässrige und lösemittelfreie Lacksysteme unterschieden werden. Lösemittelhaltige Lacke unterscheidet man weiterhin in bei Umgebungstemperatur filmbildende Systeme und Einbrennlacke, die physikalisch oder chemisch trocknen können.

Alle lösemittelhaltigen Lacke enthalten Pigmente, Füllstoffe, Bindemittel, Lösemittel und weitere Additive. Lösemittel können beispielsweise, aber nicht darauf beschränkt, Kohlenwasserstoffe wie Benzine, Naphtha, Xylol, Toluol, Alkohole wie Methanol, Ethanol, Propanol, Butanol, Pentanol, Hexanol, Ester wie Ethylacetat, Butylacetat, Ether wie Dipropylether, Dibutylether, Dipentylether, Dihexylether, Diheptylether, Dioctylether, Dinonylether, Didecylether, Ethylglycol, Butylglycol oder Butyldiglycol sein. Pigmente können anorganischer und/oder organischer Natur sein.

Weitere im Sinne der vorliegenden Erfindung geeignete Additive sind beispielsweise Schwermetallsalze von Carbonsäuren als Sikkativ für oxidativ härtende Systeme, Hautverhinderungsmittel wie Ketoxim, UV-Absorber, Weichmacher wie beispielsweise die Ester von Phthalsäure, Adipinsäure, Trimellitsäure, Sebacinsäure, Citronensäure, Phosphorsäure, Benzoesäure oder Fettsäuren mit Alkoholen, Kohlenwasserstoffe, chlorierte Paraffine oder epoxydierte Fettsäureester oder Öle, Fließmittel oder Dispergierhilfsmittel.

Beispielsweise kommen bei Umgebungstemperatur durch physikalische Trocknung filmbildende Systeme Bindemittel wie Cellulosenitrat, andere Celluloseester, Polyvinylhalogenide und deren Mischpolymerisate, Polyvinylester, Polystyrol, Kohlenwasserstoffharze, Kautschukderivate, hochpolymere Epoxydharze, Polyamide, Polycarbonate, Polyacrylatharze zum Einsatz.

In chemisch trocknenden Systemen nach der vorliegenden Erfindung werden die Bindemittel z.B. durch Einwirkung von Luftsauerstoff oxidiert, wie bei mehrfach ungesättigten Ölen, Alkydharzen oder Epoxydharzestern. Eine andere Möglichkeit der chemisch trocknenden Systeme sind beispielsweise zwei Komponentensysteme (2K) wie 2K-Polyurethan-Lacke, wobei das Bindemittel durch Reaktion von Isocyanatgruppen mit Alkoholgruppen trocknet. Alkoholgruppen können beispielsweise in gesättigten Polyestern, Alkydharzen, Acrylatharzen, Polyethern, Epoxydharzen und Epoxydestern, PVC-Copolymeren oder Polyvinylacetalen enthalten sein.

Einbrennlacke bilden erst bei Temperaturen zwischen 80 und 250°C Filme. Bindemittel können sowohl aus mindestens 2 untereinander reaktiven Komponenten, wie Aminoharze, als auch aus selbstvernetzenden Bausteinen aufgebaut sein. Basisbausteine bilden hier Amide wie Harnstoff, Carbamat, Melamin, Benzoguanamin oder Glykoluril und Formaldehyd. Aminoharze können ebenfalls mit Hydroxygruppen enthaltenden Bindemitteln wie Alkydharzen, gesättigten Polyestern, hydroxy-funktionellen Acrylatharzen, Epoxydharzen, Epoxydharzestern und Polyvinylharzen umgesetzt werden. Eine andere Möglichkeit sind Phenolharze, die durch Umsetzung von Phenolen mit Formaldehyd erhalten werden. Ebenfalls bekannt sind Einbrennlacke auf Basis verkappter Polyisocyanate, Acrylatharze, Polyestern oder Polysiloxanen.

Je nach nichtflüchtigem Anteil unterscheidet man die lösemittelhaltigen Lacksysteme in "low solids" (<30%), "normal solids" (30-60%), "medium solids" (60-70%) und "high solids" (>70%).

Wässrige Lacksysteme enthalten im Gegensatz zu den lösemittelhaltigen Lacksystemen Wasser als Hauptlösemittel. Daneben können noch Co-Lösemittel wie Ethanol, Propanol, Isopropanol oder Butanol zum Einsatz kommen. Als Bindemittel finden hier Polymerdispersionen wie beispielsweise Acryldispersionen, Styrol-Acrylatdispersionen, Vinylacetat-Ethylen-Copolymerdispersionen in Wasser, wasserverdünnbare Alkydharze und/oder Epoxydharze Verwendung.

Weitere Additive in wässrigen Lacksystemen können Rheologieadditive wie Polymere oder anorganische Schichtsilicate, Dispergiermittel wie Polyacrylate oder Polyphosphate, Entschäumer, z.B. auf Basis von Kohlenwasserstoffen oder Siliconen, Konservierungsmittel, Filmbildehilfsmittel, pH-Stabilisatoren oder Korrosionsschutzadditive sein. Ebenso wie lösemittelhaltige Einbrennlacke sind diese auch als wässrige Systeme verfügbar.

Lösemittelfreie Lacksysteme können entweder chemisch reaktiv wie beispielsweise 2K-Polyurethan-Lacke sein, bei denen entweder ein flüssiges Polyol mit einem flüssigen Polyisocyanat oder ein flüssiges, mit blockierten Isocyanatgruppen terminiertes Präpolymer mit einem flüssigen Polyamin reagiert, 2K-Epoxydharze, 2K-ungesättigte Polyester, wie beispielsweise lineare, lösliche Polykondensate aus ungesättigten und teilweise gesättigten Dicarbonsäuren, beispielsweise Maleinsäureanhydrid oder Fumarsäure, und mehrwertigen Alkoholen wie Ethylenglycol, 1,3-Propandiol, Diethylenglycol oder Neopentylglycol. Eine andere Möglichkeit der Härtung ist die UV-induzierte Trocknung, wobei hier durch UV-Licht eine radikalische Vernetzungsreaktion ausgelöst wird. Bindemittel für UV-Lacke sind beispielsweise ungesättigte Polyester, Acrylate, beispielsweise Epoxydacrylate, Polyesteracrylate, Polyetheracrylate, Polyurethanacrylate, ungesättigte Acrylatharze oder Siliconacrylate.

In Pulverlacken wird kein Lösemittel verwendet, die Härtung erfolgt in der Schmelze. Eine niedrige Schmelzviskosität ist erwünscht. Die Pulver weisen meist eine mittlere Korngröße von 18 bis 80 µm auf. Als Bindemittel werden verwendet für thermoplastische Pulverlacke Polyethylen, Polyvinylchlorid, Polyamide, Ethylen-Vinylalkohol-Copolymere und gesättigte Polyester, für vernetzende Pulverlacke Epoxydharze, Epoxydharz/Polyester, Hybridsysteme, Polyurethane Polyestersysteme oder Acrylatharze.

Weitere geeignete Lacksysteme und ihre beispielhafte Zusammensetzung sind z.B. in dem Lehrbuch "Lackformulierung und Lackrezeptur" von Bodo Müller und Ulrich Poth, erschienen im Vincentz Verlag, beschrieben. Diese werden hiermit auch zur Offenbarung der vorliegenden Erfindung gemacht.

Die Erfindung wird durch folgende Beispiele erläutert:
Das Lackadditiv wurde hergestellt durch gemeinsames Vermahlen der Dialkylether und des anorganischen Trägers zu Partikeln.
Beispiel 1: Herstellen eines Additivs auf Basis von Kieselsäure 50 g Dioctadecylether (NACOL® Ether 18 von der Sasol Germany GmbH) wurden mit 50 g einer Kieselsäure (z.B. Aerosil® 300 von Evonik) in eine Batch-Mühle eingewogen und für 5 min vermahlen. Das Produkt wurde bei 80°C für 1 h getempert.
Beispiel 2: Herstellen eines Additivs auf Basis von Tonerde 50 g Dioctadecylether (NACOL® Ether 18 von der Sasol Germany GmbH) wurden mit 50 g einer Tonerde (Puralox® UF5/230 von der Sasol Germany GmbH) in eine Batch-Mühle eingewogen und für 5 min vermahlen. Das Produkt wurde danach bei 80°C für 1 h getempert.
In den nachfolgenden Beispielen wurde der Dialkylether durch Heißimprägnierung des anorganischen Trägers aufgezogen.
Beispiel 3: Herstellen eines Additivs auf Basis von Kieselsäure 50 g Dioctadecylether (NACOL® Ether 18 von der Sasol Germany GmbH), werden aufgeschmolzen und mit 50 g einer Kieselsäure (Aerosil® 300 von Evonik) vermischt. Nach dem Erkalten wurde der Feststoff in einer Batch-Mühle für 5 min vermahlen.
Beispiel 4: Herstellen eines Additivs auf Basis von Tonerde
50 g Dioctadecylether (NACOL® Ether 18 von der Sasol Germany GmbH) wurden aufgeschmolzen und mit 50 g einer Tonerde (z.B. Disperal® HP 14 γ von der Sasol Germany GmbH) vermischt. Nach dem Erkalten wurde der Feststoff wird ein in einer Batch-Mühle für 5 min vermahlen.
Nach einer weiteren Ausgestaltung wurde die organische Belegung der Polykieselsäure oder dem Tonerdehydrat vor dem Trocknen zugegeben.
Beispiel 5: Herstellen eines Additivs auf Basis von Kieselsäure 50 g Dioctadecylether (NACOL® Ether 18 von der Sasol Germany GmbH) wurden aufgeschmolzen und mit 50 g Trockengehalt einer frisch hergestellten Polykieselsäure zusammengegeben. Das Produkt wurde bei 120°C getrocknet und anschließend auf die gewünschte Korngröße vermahlen.
Beispiel 6: Herstellen eines Additivs auf Basis von Tonerde
50 g Dioctadecylether (NACOL® Ether 18 von der Sasol Germany GmbH) wurden aufgeschmolzen und mit 50 g Trockengehalt eines frisch hergestellten Tonerdehydrats zusammengegeben. Das Produkt wurde bei 120°C getrocknet und anschließend auf die gewünschte Korngröße vermahlen.
In den folgenden Beispielen werden folgende Rohstoffe eingesetzt:

**Tabelle I Rohstoffe**

| Handelsname | Chemische Bezeichnung | Hersteller |
|---|---|---|
| Crelan® EF 403 | Cycloaliphatisches Polyuretdion (MW=310 g/mol) | Bayer |
| Rucote® XP 2566 | Hydroxylgruppenhaltiger Polyester (OH-Zahl:38) | Bayer |
| Rucote® 109 | Hydroxylgruppenhaltiger Polyester (OH-Zahl:265) | Bayer |
| Resiflow® PV 88 | Acrylatverlaufmittel auf Silikat | Worlée |

Die auf diese Weise hergestellten Additive fanden in Pulverlacken Verwendung. Dies soll an folgenden Beispielen erläutert werden:

**Tabelle II mit Beispielen 7 bis 9**

| Beispiel Nr. | Additiv |
|---|---|
| 7 | Beispiel 2 |
| 8 | Beispiel 4 |
| 9 | Dioctadecylether |

160.9 g Crelan® EF 403, 224.8 g Rucote® XP 2566, 96.1 g Rucote® 109, 6.0 g Resiflow® PV 88, 2.5 g Benzoin, 5 g Gasruß FW 200 und 5 g des Additivs wurden 5 min in einem Mischer bei 10000 UpM homogenisiert. Anschließend wurde in einem Zweiwellenextruder bei Temperaturen von 100°C (Zone 1) und 110°C (Zone 2) mit einer Wellendrehzahl von 200 UpM, Produkttemperatur 110 bis 115°C, einer Drehzahl der Aufgabeschnecke von 15 UpM und einer Walzendrehzahl der Kühlwalze von 40 UpM extrudiert. Die Pulverlackextrudate wurde zerkleinert und anschließend in einer Siebbodenmühle bei 10000 UpM feingemahlen. Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgte über 10 Minuten bei 200°C.

**Tabelle III mit Beispielen 10 bis14:**

| Beispiel Nr. | Additiv | Beispiel Nr. | Additiv |
|---|---|---|---|
| 10 | Beispiel 1 | 13 | Dioctadecylether |
| 11 | Beispiel 2 | 14 | Dibehenylether |
| 12 | Beispiel 3 | | |

157.5 g Crelan® EF 403, 220 g Rucote® XP 2566, 94 g Rucote® 109, 6.0 g Resiflow® PV 88, 2.5 g Benzoin, 4.9 g Gasruß FW 200 und 15 g des Additivs wurden 5 min in einem Mischer bei 10000 UpM homogenisiert. Anschließend wird in einem Zweiwellenextruder bei Temperaturen von 100°C (Zone 1) und 110°C (Zone 2) mit einer Wellendrehzahl von 200 UpM, Produkttemperatur 110-115°C, einer Drehzahl der Aufgabeschnecke von 15 UpM und einer Walzendrehzahl der Kühlwalze von 40 UpM extrudiert. Die Pulverlackextrudate wurden zerkleinert und anschließend in einer Siebbodenmühle bei 10000 UpM feingemahlen. Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgt über 10 Minuten bei 200°C.

### Vergleichsbeispiel 1

160.9 g Crelan® EF 403, 224.8 g Rucote® XP 2566, 96.1 g Rucote® 109, 6.0 g Resiflow® PV 88, 2.5 g Benzoin, 5 g Gasruß FW 200 und 5 g eines mikronisierten PE-Wachses (ex. BYK) wurden 5 min in einem Mischer bei 10000 UpM homogenisiert. Anschließend wurde in einem Zweiwellenextruder bei Temperaturen von 100°C (Zone 1) und 110°C (Zone 2) mit einer Wellendrehzahl von 200 UpM, Produkttemperatur 110-115°C, einer Drehzahl der Aufgabeschnecke von 15 UpM und einer Walzendrehzahl der Kühlwalze von 40 UpM extrudiert. Die Pulverlackextrudate wurden zerkleinert und anschließend in einer Siebbodenmühle bei 10000 UpM feingemahlen. Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgte über 10 Minuten bei 200°C.

### Vergleichsbeispiel 2

160.9 g Crelan® EF 403, 224.8 g Rucote® XP 2566, 96.1 g Rucote® 109, 6.0 g Resiflow® PV 88, 2.5 g Benzoin, 5 g Gasruß FW 200 und 5 g eines pulverförmigen synthetischen Polymers (Ceraflour® 967, ex. BYK) wurden 5 min in einem Mischer bei 10000 UpM homogenisiert. Anschließend wurde in einem Zweiwellenextruder bei Temperaturen von 100°C (Zone 1) und 110°C (Zone 2) mit einer Wellendrehzahl von 200 UpM, Produkttemperatur 110-115°C, einer Drehzahl der Aufgabeschnecke von 15 UpM und einer Walzendrehzahl der Kühlwalze von 40 UpM extrudiert. Die Pulverlackextrudate werden zerkleinert und anschließend in einer Siebbodenmühle bei 10000 UpM feingemahlen.

Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgte über 10 Minuten bei 200°C.

### Vergleichsbeispiel 3

157.5 g Crelan® EF 403, 220 g Rucote® XP 2566, 94 g Rucote® 109, 6.0 g Resiflow® PV 88, 2.5 g Benzoin, 4.9 g Gasruß FW 200 und 15 g eines mikronisierten PE-Wachses (ex. BYK) wurden 5 min in einem Mischer bei 10000 UpM homogenisiert. Anschließend wurde in einem Zweiwellenextruder bei Temperaturen von 100°C (Zone 1) und 110°C (Zone 2) mit einer Wellendrehzahl von 200 UpM, Produkttemperatur 110 bis 115°C, einer Drehzahl der Aufgabeschnecke von 15 UpM und einer Walzendrehzahl der Kühlwalze von 40 UpM extrudiert. Die Pulverlackextrudate wurden zerkleinert und anschließend in einer Siebbodenmühle bei 10000 UpM feingemahlen. Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgte über 10 Minuten bei 200°C.

### Vergleichsbeispiel 4

157.5 g Crelan® EF 403, 220 g Rucote® XP 2566, 94 g Rucote® 109, 6.0 g Resiflow® PV 88, 2.5 g Benzoin, 4.9 g Gasruß FW 200 und 15 g eines pulverförmigen synthetischen Polymers (Ceraflour® 967, ex. BYK) wurden 5 min in einem Mischer bei 10000 UpM homogenisiert. Anschließend wird in einem Zweiwellenextruder bei Temperaturen von 100°C (Zone 1) und 110°C (Zone 2) mit einer Wellendrehzahl von 200 UpM, Produkttemperatur 110-115°C, einer Drehzahl der Aufgabeschnecke von 15 UpM und einer Walzendrehzahl der Kühlwalze von 40 UpM extrudiert. Die Pulverlackextrudate wurden zerkleinert und anschließend in einer Siebbodenmühle bei 10000 UpM feingemahlen. Grobkornanteile über 120 µm wurden mit einem Rüttelsieb entfernt und das Pulver mit einer Korona-Pistole bei 70 kV auf Stahlbleche elektrostatisch aufgetragen. Der Einbrand erfolgte über 10 Minuten bei 200°C.

Die erhaltenen Pulverlacke wurden auf ihre Reaktivität, ihre Flexibilität, ihre Chemikalienresistenz, ihre Abriebbeständigkeit, ihre Vergilbungsbeständigkeit und ihren Glanz untersucht.

Die angewandten Analysen seien im Folgenden kurz erklärt:

### Reaktivität

Die Reaktivität eines Systems wurde mittels der Gelzeit bestimmt. Durch die Ausbildung des polymeren Netzwerkes wurde ein starker Viskositätsanstieg beobachtet. Der Zeitpunkt dieser Eigenschaftsänderung wurde bei 200°C mit einem Scherscheibenviskosimeter bestimmt.

### Flexibilität

Die Flexibilität des Lacksystems wurde mit Hilfe der Erichsen-Tiefung gemäß DIN EN 50101 bestimmt. Das mit Pulverlack beschichtete Blech wurde durch eine Niederhaltekraft auf der Matrize gehalten und eine gehärtete Kugel drückte von unten gegen das Blech und bewirkt dabei eine Kaltverformung. Es wurde der Weg angegeben, der bis zur Bildung eines Risses zurückgelegt wurde.

### Chemikalienbeständigkeit

Die lackierten Bleche wurden mit Aceton versehen und mit Glasplatten bedeckt.
Das Lösemittel wirkte über Nacht ein. Am folgenden Tag wurde die Acetonbeständigkeit optisch bewertet. Dabei kam folgende Skala zur Anwendung:

**Tabelle IV Acetonbeständigkeit Oberfläche**

| Note | Erklärung |
|---|---|
| 0 | Oberfläche unverändert |
| 1 | Oberfläche sehr leicht verändert |
| 2 | Oberfläche leicht verändert |
| 3 | Oberfläche verändert |
| 4 | Oberfläche stark verändert |
| 5 | Oberfläche komplett verändert |

### Abriebbeständigkeit

Um die Abriebbeständigkeit zu prüfen, wurde die Oberfläche mit 10 Doppelhüben eines mit Sandpapier versehenen 500 g Gewichtes behandelt und anschließend der Glanz der verkratzten Oberflächen bewertet. Als Maß der Abriebbeständigkeit wurde der Restglanz in % verwendet.

*Farbmetrik:* Die Messung der Farbwerte erfolgte mit einem handelsüblichen Farbwertmessgerät (X-rite Color Eye 7000a) als Differenz zu einem Standard. Die Ergebnisse werden im Lab-Format angegeben. Der Lab-Farbraum ist ein Messraum, in dem alle wahrnehmbaren Farben enthalten sind und der geräteunabhängig ist. Die Farbmessung erfolgt analog DIN 6174.

*Glanz:* Der Glanz wurde mit einem BYK haze-gloss Messgerät gemäß DIN EN ISO 2813 bestimmt.

**Tabelle IV Flexibilität, Chemikalienbeständigkeit und Restglanz nach Abrieb**

| Beispiel | Erichsentiefung [mm] | Chemikalienbeständigkeit | Restglanz nach Abrieb [%] |
|---|---|---|---|
| 7 | 8,5 | 3 | 86,5 |
| 8 | 7,0 | 3 | 90,8 |
| 9 * | 6,5 | 3 | 69,3 |
| Vergleich 1 | 6,0 | 3 | 68,8 |
| Vergleich 2 | 2,7 | 3 | 34,8 |
| 10 | 8,3 | 2 | 68,3 |
| 11 | 6,5 | 1 | 73,5 |
| 12 | 8,3 | 2 | 68,3 |
| 13 * | 7,2 | 1 | 72,3 |
| 14 * | 7,9 | 1 | 74,5 |
| Vergleich 3 | 5,8 | 3 | 63,7 |
| Vergleich 4 | 7,8 | 2 | 33,0 |

| | | | |
|---|---|---|---|
| * = nicht erfindungsgemäß | | | |

In keinem der Beispiele wurde ein negativer Einfluss auf die Reaktivität oder die Farbmetrik gefunden.

Ziel war insbesondere die Herstellung eines Additivs mit mindestens 50% Restglanz und einer Erichsentiefung von mindestens 6,5 mm. Die Vergleichsbeispiele 2 und 4 erreichen das Mindestkriterium der Abriebbeständigkeit, ausgedrückt durch einen Restglanz von mehr als 50% nicht. Die Vergleichsbeispiele 1 und 3 liefern zwar eine ausreichende Abriebbeständigkeit, erfüllen allerdings nicht die Mindestvoraussetzungen für die Flexibilität der Beschichtung.

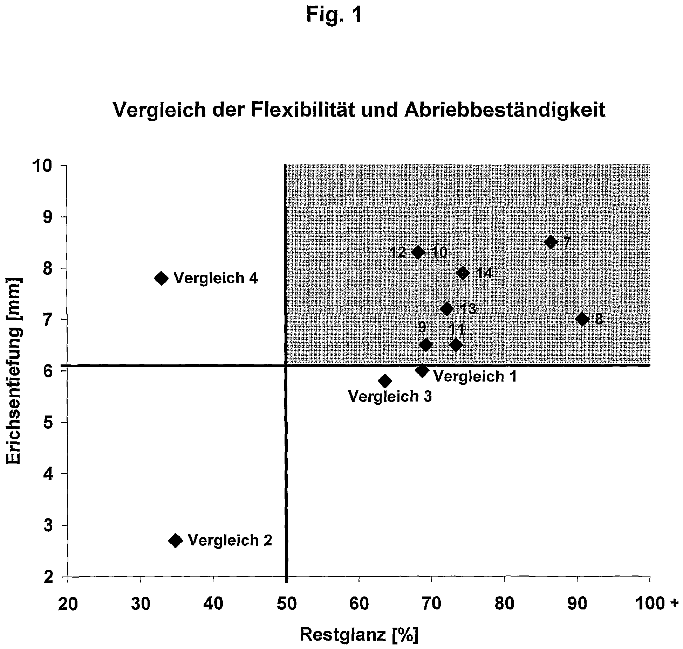

Die Produkte aus den Beispielen lösen die gestellte Aufgabe einer verbesserten Abriebbeständigkeit und Flexibilität wie in Figur 1 gezeigt.

Durch das Verwenden von geträgerten bzw. ungeträgerten Dialkylethern können die Eigenschaften im Bezug auf Flexibilität, Chemikalienbeständigkeit sowie Abriebbeständigkeit des Pulverlackes deutlich verbessert werden, ohne Einfluss auf die Reaktivität und die Farbmetrik zu haben.

## Patentansprüche

1. Zusammensetzung zur Herstellung von Beschichtungen enthaltend aushärtbare Bindemittel und Dialkylether, wobei die Dialkylether 24 und mehr Kohlenstoffatome aufweisen und die Dialkylether in der flüssigen oder pulverförmigen Zusammensetzung als Feststoff vorliegen, wobei die Dialkylether als Feststoffpartikel mit mittleren Teilchengrößen (D₅₀) von kleiner 150 µm in der Zusammensetzung enthalten sind und die Dialkylether auf einen anorganischen Träger aufgezogen sind, wobei der anorganische Träger Kieselsäure, Tonerde, Tonerdehydrat oder ein Gemisch von Kieselsäure und Tonerde umfasst, wobei der mittlere Teilchendurchmesser D₅₀ nach ISO 13320-1 bestimmt und nach der Fraunhofer-Theorie ausgewertet wird.

2. Zusammensetzung nach Anspruch 1, wobei die eingesetzten Dialkylether zu größer 95 Mol% lineare Alkyl-Reste aufweisen.

3. Zusammensetzung nach Anspruch 1, wobei die Dialkylether einen Schmelzpunkt nach DIN EN ISO 6321 von größer 25°C aufweisen.

4. Zusammensetzung nach Anspruch 1, wobei die Dialkylether eines oder mehrere Mitglieder ausgewählt aus der nachfolgenden Gruppe sind: Didodecylether, Ditetradecylether, Dihexadecylether, Doctadecylether, Dieicosylether und Didocosylether.

5. Zusammensetzung nach mindestens einem der vorhergehenden Ansprüche, wobei die Feststoffpartikel mittlere Teilchengrößen (D₅₀) von kleiner 60 µm aufweisen.

6. Zusammensetzung nach mindestens einem der Ansprüche 1 bis 4, wobei die Dialkylether zusammen mit dem anorganischen Träger zur Herstellung eines Mahlprodukts vermahlen und zur Herstellung der Beschichtung eingesetzt werden.

7. Zusammensetzung nach Anspruch 6, wobei das Mahlprodukt bei 5°C oder mehr über dem Schmelzpunkt des eingesetzten Dialkylethers oder der eingesetzten Dialkylether-Mischung vor dem Einsatz in der Zusammensetzung getempert wurde, vorzugsweise für länger als 5 min.

8. Zusammensetzung nach mindestens einem der vorhergehenden Ansprüche, wobei die Dialkylether 32 bis 44 Kohlenstoffatome aufweisen.

9. Zusammensetzung nach mindestens einem der vorhergehenden Ansprüche, wobei die eingesetzten Dialkylether zu
a) 0,1 bis 5,0 Gew.%, bevorzugt 0,5 bis 3,0 Gew.%, in in Feststoffzusammensetzungen insbesondere Pulverlacken, und zu
b) 0,05 bis 3,0 Gew.%, bevorzugt 0,5 bis 2,0 Gew.%, in flüssigen Zusammensetzungen eingesetzt werden.

10. Zusammensetzung nach mindestens einem der vorhergehenden Ansprüche, wobei die eingesetzten Dialkylether eine Reinheit von größer 95 Gew.%, bezogen auf die Ether, und/oder eine Reinheit von größer 70 Gew.% bezogen auf die Ether einschließlich Olefin- und Alkoholverunreinigungen aufweisen.

11. Verwendung von Dialkylethern in Farben und Lacken, wobei die Dialkylether 24 und mehr Kohlenstoffatome aufweisen, die Dialkylether als Feststoffpartikel mit mittleren Teilchengrößen (D₅₀) von kleiner 150 µm eingesetzt werden und die Dialkylether auf einen anorganischen Träger aufgezogen sind, wobei der anorganische Träger Kieselsäure, Tonerde, Tonerdehydrat oder ein Gemisch von Kieselsäure und Tonerde umfasst, wobei der mittlere Teilchendurchmesser D₅₀ nach ISO 13320-1 bestimmt und nach der Fraunhofer-Theorie ausgewertet wird.

12. Verwendung nach Anspruch 11, wobei die Dialkylether 32 bis 44 Kohlenstoffatome aufweisen.

13. Verwendung nach Anspruch 11 oder 12, wobei die Feststoffpartikel mittlere Teilchengrößen (D₅₀) von kleiner 60 µm aufweisen.

## Claims

1. A composition for producing coatings, comprising curable binders and dialkyl ethers, wherein the dialkyl ethers have 24 or more carbon atoms and the dialkyl ethers are present as solids in the liquid or powdered composition, wherein the dialkyl ethers are comprised in the composition as solid particles with an average particle size (D₅₀) of less than 150 µm and the dialkyl ethers are affixed to an inorganic carrier, wherein the inorganic carrier is silicic acid, alumina, alumina hydrate or a mixture of silicic acid and alumina, wherein the average particle diameter D₅₀ is determined according to ISO 13320-1 and evaluated based on Frauenhofer theory.

2. The composition according to Claim 1, wherein the dialkyl ethers used comprise more than 95 mol% linear alkyl moieties.

3. The composition according to Claim 1, wherein the dialkyl ethers have a melting point of more than 25°C according to DIN EN ISO 6321.

4. The composition according to Claim 1, wherein the dialkyl ethers are one or more member selected from the following group: didodecyl ether, ditetradecyl ether, dihexadecyl ether, doctadecyl ether, dieicosyl ether and didocosyl ether.

5. The composition according to at least one of the preceding claims, wherein the solid particles have an average particle size (D₅₀) of less than 60 µm.

6. The composition according to at least one of the preceding Claims 1 to 4, wherein the dialkyl ethers are milled together with the inorganic carrier to produce a milled product and are used to produce the coating.

7. The composition according to Claim 6, wherein the milled product has been tempered at 5°C or more above the melting point of the dialkyl ether used or the dialkyl ether mixture used prior to being used in the composition, preferably for more than five minutes.

8. The composition according to at least one of the preceding claims, wherein the dialkyl ethers have 32 to 44 carbon atoms.

9. The composition according to at least one of the preceding claims, wherein the dialkyl ethers are used in amounts of
a) 0.1 to 5.0 wt%, preferably 0.5 to 3.0 wt%, in solid compositions, in particular powder coatings, and
b) 0.05 to 3.0 wt%, preferably 0.5 to 2.0 wt%, in liquid compositions.

10. The composition according to at least one of the preceding claims, wherein the dialkyl ethers used have a purity of greater than 95 wt%, based on the ether, and/or a purity of greater than 70 wt% based on the ether including olefin impurities and alcohol impurities.

11. Use of dialkyl ethers in paints and varnishes, wherein the dialkyl ethers have 24 or more carbon atoms, the dialkyl ethers are used in the composition as solid particles with an average particle size (D₅₀) of less than 150 µm and the dialkyl ethers are affixed to an inorganic carrier, wherein the carrier is silicic acid, alumina, alumina hydrate or a mixture of silicic acid and alumina, wherein the average particle diameter D₅₀ is determined according to ISO 13320-1 and evaluated based on Frauenhofer theory.

12. Use according to Claim 11, wherein the dialkyl ethers comprise 32 to 44 carbon atoms.

13. Use according to Claims 11 or 12, wherein the solid particles have average particle sizes (D₅₀) of less than 60 µm.

## Revendications

1. Composition pour la production de revêtements contenant des liants durcissables et des dialkyléthers, dans laquelle les dialkyléthers présentent 24 atomes de carbone et plus et les dialkyléthers se présentent sous forme de matière solide dans la composition liquide ou pulvérulente, dans laquelle les dialkyléthers sont présents dans la composition sous forme de particules de matière solide ayant des tailles moyennes de particules (D₅₀) inférieures à 150 µm et les dialkyléthers sont appliqués sur un support inorganique, dans laquelle le support inorganique comprend de la silice, de l'argile, de l'argile hydratée ou un mélange de silice et d'argile, dans laquelle le diamètre moyen des particules D₅₀ est déterminé d'après la norme ISO 13320-1 et évalué d'après la théorie de Fraunhofer.

2. Composition selon la revendication 1, dans laquelle les dialkyléthers mis en oeuvre présentent des résidus d'alkyle linéaire à plus de 95 % en moles.

3. Composition selon la revendication 1, dans laquelle les dialkyléthers présentent un point de fusion d'après la norme DIN EN ISO 6321 supérieur à 25°C.

4. Composition selon la revendication 1, dans laquelle les dialkyléthers sont un ou plusieurs membres choisis dans le groupe suivant : didodécyléther, ditétradécyléther, dihexadécyléther, doctadécyléther, diéicosyléther et didocosyléther.

5. Composition selon au moins l'une des revendications précédentes, dans laquelle les particules de matière solide présentent des tailles moyennes de particules (D₅₀) inférieures à 60 µm.

6. Composition selon au moins l'une des revendications 1 à 4, dans laquelle les dialkyléthers sont broyés conjointement avec le support inorganique pour la production d'un produit broyé et mis en oeuvre pour la production du revêtement.

7. Composition selon la revendication 6, dans laquelle le produit broyé a été étuvé à 5°C ou plus au-dessus du point de fusion du dialkyléther mis en oeuvre ou du mélange de dialkyléthers mis en oeuvre avant la mise en oeuvre dans la composition, de préférence pendant plus de 5 min.

8. Composition selon au moins l'une des revendications précédentes, dans laquelle les dialkyléthers présentent 32 à 44 atomes de carbone.

9. Composition selon au moins l'une des revendications précédentes, dans laquelle les dialkyléthers mis en oeuvre sont utilisés à
a) 0,1 à 5,0 % en poids, de préférence 0,5 à 3,0 % en poids, dans les compositions de matière solide, en particulier de laques pulvérulentes, et à
b) 0,05 à 3,0 % en poids, de préférence 0,5 à 2,0 % en poids, dans les compositions liquides.

10. Composition selon au moins l'une des revendications précédentes, dans laquelle les dialkyléthers mis en oeuvre présentent une pureté supérieure à 95 % en poids, par rapport aux éthers, et/ou une pureté supérieure à 70 % en poids, par rapport aux éthers comprenant les impuretés d'oléfine et d'alcool.

11. Utilisation des dialkyléthers dans des peintures et des laques, dans laquelle les dialkyléthers présentent 24 atomes de carbone et plus, les dialkyléthers sont mis en oeuvre sous forme de particules de matière solide ayant des tailles moyennes de particules (D₅₀) inférieures à 150 µm et les dialkyléthers sont appliqués sur un support inorganique, dans laquelle le support inorganique comprend de la silice, de l'argile, de l'argile hydratée ou un mélange de silice et d'argile, dans laquelle le diamètre moyen des particules D₅₀ est déterminé d'après la norme ISO 13320-1 et évalué d'après la théorie de Fraunhofer.

12. Utilisation selon la revendication 11, dans laquelle les dialkyléthers présentent 32 à 44 atomes de carbone.

13. Utilisation selon la revendication 11 ou 12, dans laquelle les particules de matière solide présentent des tailles moyennes de particules (D₅₀) inférieures à 60 µm.
